(19) **Europäisches Patentamt European Patent Office Office européen des brevets**

(11) **EP 4 444 514 B1**

(12) **FASCICULE DE BREVET EUROPEEN**

(45) Date de publication et mention de la délivrance du brevet:
**04.02.2026 Bulletin 2026/06**

(21) Numéro de dépôt: **22830779.9**

(22) Date de dépôt: **06.12.2022**

(51) Classification Internationale des Brevets (IPC):
**B25J 11/00** *(2006.01)* **B25J 15/00** *(2006.01)*

(52) Classification Coopérative des Brevets (CPC):
**B25J 15/0095; B25J 11/005; B25J 15/0019**

(86) Numéro de dépôt international:
**PCT/EP2022/084660**

(87) Numéro de publication internationale:
**WO 2023/104829 (15.06.2023 Gazette 2023/24)**

(54) **DISPOSITIF POUR LA RÉALISATION D'AU MOINS UNE TÂCHE SUR UNE STRUCTURE À TRAVAILLER, LEDIT DISPOSITIF COMPRENANT UN ÉLÉMENT PRESSEUR TÉLÉSCOPIQUE**

**VORRICHTUNG ZUM DURCHFÜHREN VON MINDESTENS EINER AUFGABE AN EINER ZU BEARBEITENDEN STRUKTUR, DIE VORRICHTUNG UMFASST EIN TELESKOPISCHES DRÜCKELEMENT**

**DEVICE FOR PERFORMING AT LEAST ONE TASK ON A STRUCTURE TO BE WORKED, SAID DEVICE COMPRISING A TELESCOPIC PRESSING ELEMENT**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **09.12.2021 FR 2113240**

(43) Date de publication de la demande:
**16.10.2024 Bulletin 2024/42**

(73) Titulaires:
• **Seti-Tec**
  **77090 Collégien (FR)**

• **Kawasaki Heavy Industries, Ltd.**
  **Kobe, Hyogo (JP)**

(72) Inventeur: **PEREIRA SANTO, Sebastien**
**2820-568 CHARNECA DA CAPARICA (PT)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2020/212631** **US-A1- 2004 102 136**
**US-B2- 10 639 804** **US-B2- 9 061 424**

**Description**

## 1. Domaine de l'invention

Le domaine de l'invention est celui de la conception et de la réalisation de dispositifs mis en œuvre dans l'industrie pour réaliser des tâches diverses sur une structure à travailler en particulier pour l'industrie aéronautique.

## 2. Art antérieur

De nombreux dispositifs sont couramment mis en œuvre pour réaliser différentes tâches ou opérations sur une structure à travailler. Il peut par exemple s'agir d'un perçage, d'un fraisurage, de la pose d'une fixation temporaire, de l'enduction d'un rivet avec du mastic puis de la pose de ce rivet dans un trou percé dans la structure ou toute autre opération.

Des dispositifs mobiles ont été développés pour permettre de réaliser des tâches sur des structures complexes comme par exemple des avions.

Au rang de ces dispositifs figurent notamment ceux du type comprenant un outillage placé à l'extrémité d'un bras robot pour être manipulé et déplacé par rapport à la structure à travailler, le dispositif comprenant des moyens de solidarisation, comme par exemple des ventouses, permettant de rendre l'outillage solidaire de la structure à travailler afin de lui faire reprendre les efforts dus à l'accomplissement de la tâche pour soulager le bras robot.

Un dispositif de ce type peut par exemple embarquer un dispositif de perçage pour permettre de réaliser des opérations de perçage.

Certains dispositifs, appelés dispositifs multi-tâche, sont susceptibles d'embarquer plusieurs modules fonctionnels chacun dédié à la réalisation d'une tâche particulière.

Un tel dispositif comprend une seule broche de sortie susceptible d'être entrainée en rotation et/ou en translation suivant un même axe via des moyens moteur et de contrôle.

Cette broche unique peut être amenée à coopérer alternativement avec les différents modules embarqués de sorte à permettre la réalisation d'une tâche à laquelle ils sont dédiés.

Les demandes de brevets PCT/EP2020/069158, PCT/EP2020/069159, PCT/EP2020/069160, PCT/EP2020/069161, PCT/EP2020/069162, déposées par la Demanderesse, décrivent des dispositifs multi-tâche

Le document WO 2020/212631 A1 divulgue un dispositif pour la réalisation d'au moins une tâche sur une structure à travailler, ledit dispositif comprenant: un bâti; des moyens de fixation dudit bâti à des moyens de manutention motorisés aptes à déplacer au moins en partie ledit dispositif dans l'espace par rapport à une structure à travailler; une broche susceptible d'être entrainée en rotation et/ou en translation suivant un même axe pour réaliser ladite au moins une tâche; un élément presseur, coaxial à ladite broche, apte à exercer un effort de compression contre la surface de ladite structure à travailler; ledit élément presseur comprenant un premier et un deuxième éléments, ledit deuxième élément comprenant une extrémité libre apte à venir au contact de ladite surface.

Dans le domaine de l'aéronautique, il est courant de devoir réaliser des trous dans des structures à travailler comprenant un empilement de tôles qui devront être ultérieurement unies au moyen de rivets insérés dans les trous. Dans ce cas, le dispositif de perçage est souvent équipé d'un élément presseur. Un tel élément presseur, qui s'étend généralement dans l'axe de la broche de sortie portant l'outil de coupe, est mobile en translation suivant cet axe pour être appuyé contre la structure à travailler avant de pratiquer le trou. La mise en œuvre de l'élément presseur permet de maintenir les tôles plaquées les unes contre les autres pendant le perçage et d'éviter que des copeaux ne s'insèrent entre les tôles pendant le perçage.

L'élément presseur peut être solidarisé au dispositif au moyen d'une rotule dont l'axe est confondu avec celui de la broche.

Un tel montage rotulé peut présenter l'avantage d'offrir la possibilité, en mesurant l'inclinaison de l'axe de l'élément presseur par rapport à l'axe de la broche, de s'assurer que l'axe de la broche est bien orthogonal à la surface de la structure à travailler, ce qui est le cas lorsque l'élément presseur est en appui contre la surface de la structure à travailler et que l'inclinaison de son axe par rapport à celui de la broche est nul.

Par ailleurs, il est généralement souhaité, pour des raisons d'encombrement et de coût, de mettre en œuvre un bras robot de faible dimensionnement pour déplacer un dispositif multi-tâche. Pour ce faire, on a recours à des moyens de solidarisation, comme des ventouses, pour fixer le dispositif à la structure à travailler et ainsi faire reprendre les efforts dus à la réalisation des tâches par la structure à travailler plutôt que par le bras robot.

Ce bras robot permet, dans le cadre de l'utilisation d'un élément presseur, d'appuyer celui-ci contre la structure à travailler. Pour réduire le dimensionnement du bras robot lorsqu'un élément presseur est mis en œuvre, il peut être utile de monter l'élément presseur mobile en translation suivant l'axe de la broche et de mettre en œuvre des moyens d'entrainement spécifiques. Un tel montage peut également permettre de mesurer les efforts de pressage appliqués par l'élément presseur contre la structure à travailler.

Outre la vérification de la normalité de la broche par rapport à la structure à travailler et la mesure des efforts de pressage de l'élément presseur contre la structure à travailler, il peut être utile de connaître d'autres paramètres comme par exemple :

- la distance initiale entre l'effecteur et la surface au moment où l'élément presseur entre en contact avec la surface ;
- la profondeur de déplacement de la surface lors de l'application de l'effort de l'élément presseur sur la surface.

Il n'existe toutefois pas à ce jour de dispositif multi-tâche muni d'un élément presseur qui permette, de manière simple efficace et compacte, d'assurer l'ensemble de ces fonctions.

Un besoin d'amélioration en ce sens des dispositifs mutli-tâche existe en conséquence.

Ainsi, la mise en œuvre des éléments presseurs peut être améliorée.

## 3. Objectifs de l'invention

L'invention a notamment pour objectif d'apporter une solution efficace à au moins certains de ces différents problèmes.

En particulier, selon au moins un mode de réalisation, un objectif de l'invention est de fournir une technique permettant d'améliorer les dispositifs multi-tâches munis d'un élément presseur.

Notamment, l'invention a pour objectif, selon au moins un mode de réalisation, de fournir un dispositif multi-tâche muni d'un élément presseur qui soit polyvalent en termes de fonctionnalités susceptibles d'être offertes.

Un autre objectif de l'invention est, selon au moins un mode de réalisation, de permettre de vérifier l'orthogonalité de la broche vis-à-vis de la surface de la structure à travailler.

Un autre objectif de l'invention est, selon au moins un mode de réalisation, de fournir une telle technique qui permette de maitriser la pression exercée par un élément pressure sur une surface contre laquelle il est comprimé.

Un autre objectif de l'invention est, selon au moins un mode de réalisation, de permettre d'évaluer la distance initiale entre un dispositif multi-tâche et la surface d'une structure à travailler au moment où l'élément presseur entre en contact avec cette surface.

Un autre objectif de l'invention est, selon au moins un mode de réalisation, de permettre d'évaluer la profondeur de déplacement de la surface lors de l'application de l'effort de l'élément presseur sur la surface.

Un autre objectif de l'invention est, selon au moins un mode de réalisation, de fournir une telle technique qui soit fiable, robuste et compact.

## 4. Présentation de l'invention

Pour ceci, l'invention propose un dispositif pour la réalisation d'au moins une tâche sur une structure à travailler, ledit dispositif comprenant :

- un bâti ;
- des moyens de fixation dudit bâti à des moyens de manutention motorisés aptes à déplacer au moins en partie ledit dispositif dans l'espace par rapport à une structure à travailler ;
- des moyens de positionnement et/ou solidarisation dudit dispositif à ladite structure à travailler ;
- une broche susceptible d'être entrainée en rotation et/ou en translation suivant un même axe pour réaliser ladite au moins une tâche ;
- un élément presseur, coaxial à ladite broche, apte à exercer un effort de compression contre la surface de ladite structure à travailler lorsque ledit dispositif est solidarisé à ladite structure par lesdits moyens de fixation ;

ledit élément presseur comprenant un premier et un deuxième éléments liés par une liaison rotule, ledit deuxième élément comprenant une extrémité libre apte à venir au contact de ladite surface et ledit premier élément étant mobile en translation suivant l'axe de ladite broche de manière tel que le deuxième élément s'oriente orthogonalement à ladite surface lorsqu'il est comprimé contre ladite surface.

Ainsi, l'invention repose sur la mise en œuvre d'un élément presseur télescopique dont l'extrémité est rotulée.

La mise en œuvre combinée d'un élément presseur télescopique et rotulé offre en outre la possibilité de réaliser une multitude de fonctions procurant un dispositif polyvalent, comme notamment :

- vérifier la normalité de l'axe de la broche par rapport à la surface d'une structure à travailler ;
- évaluer la force appliqué par l'élément presseur contre la structure à travailler;
- évaluer la distance initiale entre l'effecteur et la surface au moment où l'élément presseur entre en contact avec la surface ;

- évaluer la profondeur de déplacement de la surface lors de l'application de l'effort de l'élément presseur sur la surface.
- La mise en œuvre de l'invention permet ainsi de procurer un dispositif multi-tâche muni d'un élément presseur, qui soit compact et polyvalent.

Un dispositif selon l'invention comprend des moyens d'entrainement en translation dudit premier élément.

Lorsqu'un dispositif selon l'invention est mis en œuvre pour réaliser un procédé de réalisation d'au moins une tache, ces moyens peuvent permettre de mettre en œuvre une étape d'entrainement en translation dudit premier élément.

Lesdits moyens d'entrainement en translation comprennent un système vis écrou.

Ledit système vis écrou comprend une portion filetée ménagée à la périphérie dudit premier élément et une bague taraudée mobile en rotation de forme complémentaire, lesdits moyens d'entrainement en translation comprenant des moyens d'entrainement en rotation de ladite bague par rapport audit premier élément immobilisé en rotation, ladite bague étant immobilisée en translation suivant son axe par rapport au bâti.

Un procédé peut ainsi comprendre une étape d'entrainement en rotation de ladite bague par rapport audit premier élément immobilisé en rotation, ladite bague étant immobilisée en translation suivant son axe par rapport au bâti.

Lesdits moyens d'entrainement en rotation comprennent un moteur relié à ladite bague par une cascade de pignons.

Selon une caractéristique possible, un dispositif selon l'invention comprend des moyens de mesure d'au moins une information représentative de la poussée suivant l'axe de ladite broche générée par ledit deuxième élément sur ladite surface.

Un procédé peut ainsi comprendre une étape de mesure d'au moins une information représentative de la poussée suivant l'axe de ladite broche générée par ledit deuxième élément sur ladite surface.

Selon une caractéristique possible, un dispositif selon l'invention comprend des moyens de détection de l'atteinte par ladite poussée :

- d'une une valeur d'entrée en contact correspondant à la valeur de poussée au moment de l'entrée en contact de l'extrémité libre du deuxième élément avec ladite surface et,
- d'une valeur de pressage de ladite structure à travailler.

Un procédé peut ainsi comprendre une étape de détection de l'atteinte par ladite poussée :

- d'une une valeur d'entrée en contact correspondant à la valeur de poussée au moment de l'entrée en contact de l'extrémité libre du deuxième élément avec ladite surface et,
- d'une valeur de pressage de ladite structure à travailler.

Selon une caractéristique possible, un dispositif selon l'invention comprend des moyens de mesure d'au moins une information représentative de l'inclinaison dudit deuxième élément par rapport à l'axe de ladite broche.

Un procédé peut ainsi comprendre une étape de mesure d'au moins une information représentative de l'inclinaison dudit deuxième élément par rapport à l'axe de ladite broche.

Selon une caractéristique possible, lesdits moyens de mesure, d'au moins une information représentative de l'inclinaison, comprennent des capteurs de distance, par exemple inductifs ou laser ou autre, portés par ledit bâti et répartis de manière uniforme autour dudit deuxième élément, lesdits capteurs étant aptes à mesurer le déplacement radial dudit deuxième élément par rapport au bâti.

Un procédé peut ainsi comprendre une étape de mesure du déplacement radial dans le plan des capteurs dudit deuxième élément par rapport au bâti.

Selon une caractéristique possible, lesdits premier et deuxième élément sont tubulaires.

Selon une caractéristique possible, un référentiel est associé audit bâti, ledit dispositif comprenant des moyens de mesure d'un déplacement en translation dudit premier élément par rapport au référentiel dudit bâti suivant l'axe de ladite broche.

Un procédé peut ainsi comprendre une étape de mesure d'un déplacement en translation dudit premier élément par rapport au référentiel dudit bâti suivant l'axe de ladite broche.

Selon une caractéristique possible, lesdits moyens de mesure du déplacement en translation dudit premier élément par rapport audit référentiel dudit bâti comprennent un capteur de mesure de l'angle de rotation du rotor dudit moteur.

Un procédé peut ainsi comprendre une étape de mesure de l'angle de rotation du rotor dudit moteur.

Selon une caractéristique possible, un dispositif selon l'invention comprend des moyens de détermination de la distance, suivant une direction parallèle à l'axe de ladite broche, entre la surface orientée vers ledit dispositif de ladite structure à travailler et une surface de référence dudit bâti dans ledit référentiel associé audit bâti, lesdits moyens de détermination déterminant ladite distance lorsque ledit dispositif est solidarisé à ladite structure à travailler par lesdits moyens de solidarisation, en tenant compte de la valeur de l'angle fourni par ledit capteur d'angle au moment où lesdits moyens de détection détectent l'atteinte par ladite poussée de ladite valeur d'entrée en contact correspondant à la valeur de poussée au moment de l'entrée en contact de l'extrémité libre du deuxième élément avec ladite surface.

Un procédé peut ainsi comprendre une étape de détermination de la distance, suivant une direction parallèle à l'axe de ladite broche, entre la surface orientée vers ledit dispositif de ladite structure à travailler et une surface de référence dudit bâti dans ledit référentiel associé audit bâti, ladite étape de détermination consistant à déterminer ladite distance lorsque ledit dispositif est solidarisé à ladite structure à travailler par lesdits moyens de solidarisation, en tenant compte de la valeur de l'angle au moment de l'atteinte par ladite poussée de ladite valeur d'entrée en contact correspondant à la valeur de poussée au moment de l'entrée en contact de l'extrémité libre du deuxième élément avec ladite surface.

Selon une variante possible, un dispositif selon l'invention comprend des moyens de mesure de la déformation de ladite structure à travailler sous ledit effort de pressage, ladite déformation correspondant au déplacement en translation du premier élément entre les moments où lesdits moyens de détection détectent que la valeur de ladite poussée passe de ladite valeur d'entrée en contact à ladite valeur de pressage.

Un procédé peut ainsi comprendre une étape de mesure de la déformation de ladite structure à travailler sous ledit effort de pressage, ladite déformation correspondant au déplacement en translation du premier élément entre les moments où la valeur de ladite poussée passe de ladite valeur d'entrée en contact à ladite valeur de pressage.

Selon une variante possible, un dispositif selon l'invention comprend :

- au moins deux modules fonctionnels, chacun desdits modules fonctionnels comprenant au moins un organe mobile apte à permettre la réalisation d'une tâche donnée ;
- une unique broche d'entrainement mobile en rotation et/ou en translation suivant un même axe et apte à coopérer individuellement avec lesdits organes mobiles pour leur pour les animer d'un mouvement de rotation et/ou de translation permettant la réalisation de leur tâche donnée.

Selon une caractéristique possible, lesdits modules fonctionnels appartiennent au groupe comprenant au moins :

- les modules de perçage ;
- les modules de pose de rivets enduit de mastic ;
- les modules de pose de fixations temporaires.

L'invention couvre également un procédé de réalisation d'au moins une tâche sur une structure à travailler au moyen d'un dispositif selon l'une quelconque des revendications 1 à 16 comprenant un élément presseur comprenant un premier et un deuxième éléments liés par une liaison rotule, ledit procédé comprenant une étape de déplacement dudit premier élément en translation suivant l'axe de ladite broche de manière tel que le deuxième élément s'oriente orthogonalement à ladite surface lorsqu'il est comprimé contre ladite surface.

## 5. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :

[Fig 1] la figure 1 illustre une vue en perspective d'un exemple de dispositif multitâche selon l'invention ;
[Fig 2] la figure 2 illustre une vue partielle en coupe suivant un plan passant par l'axe de la broche du dispositif de la figure 1;
[Fig 3] la figure 3 illustre une vue de détail de la figure 1 centrée sur l'élément presseur ;
[Fig 4] la figure 4 illustre une vue en coupe de la figure 3 suivant un plan orthogonal à l'axe de la broche ;

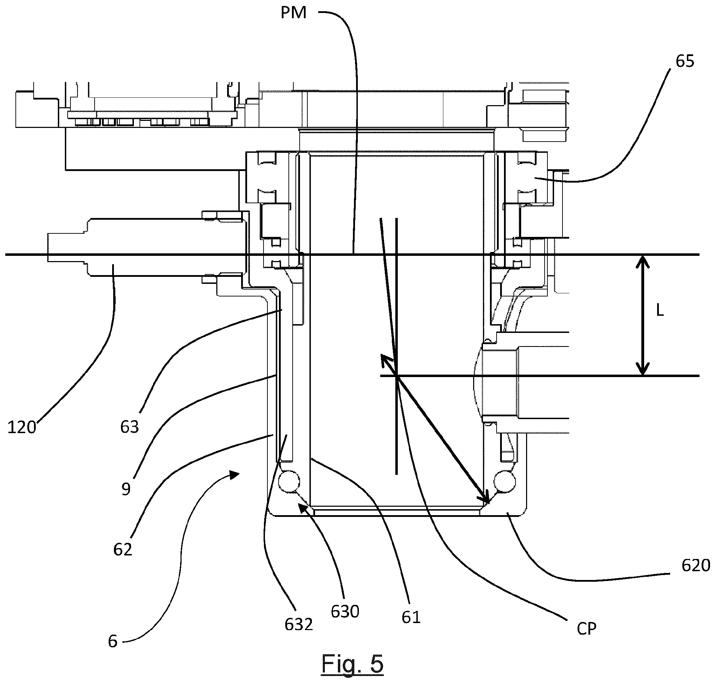

[Fig 5] la figure 5 illustre une vue de détail de la figure 3.

## 6. Description de modes de réalisation particuliers

### 6.1. Architecture

**Moyens de fixation à des moyens de manutention**

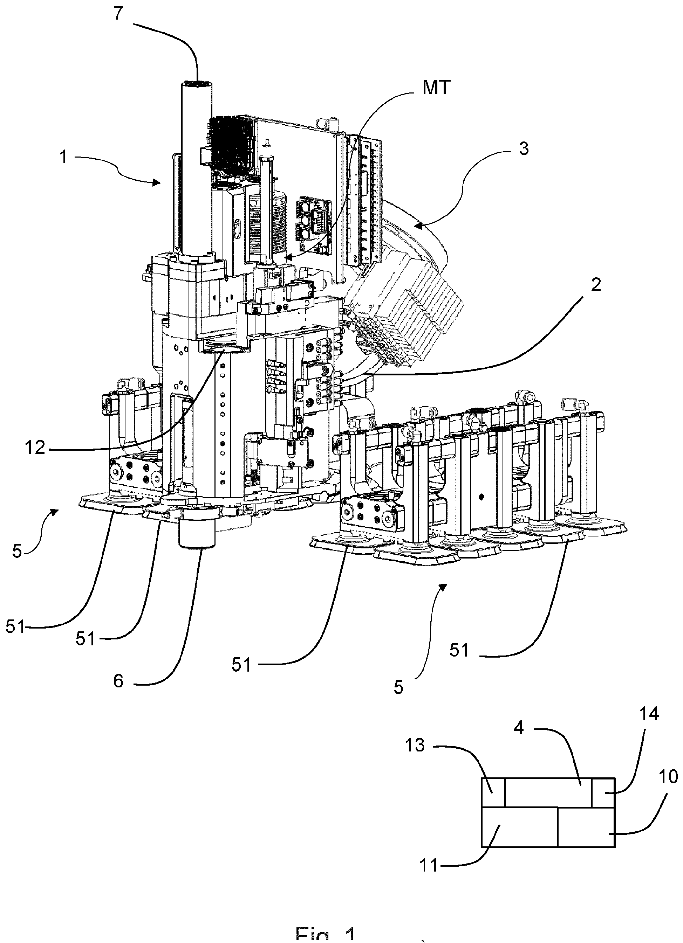

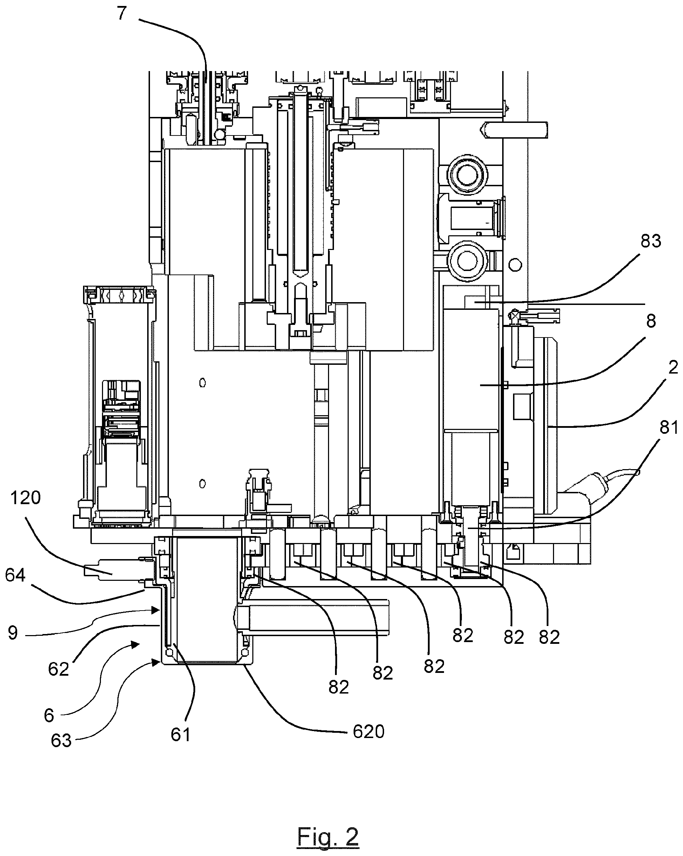

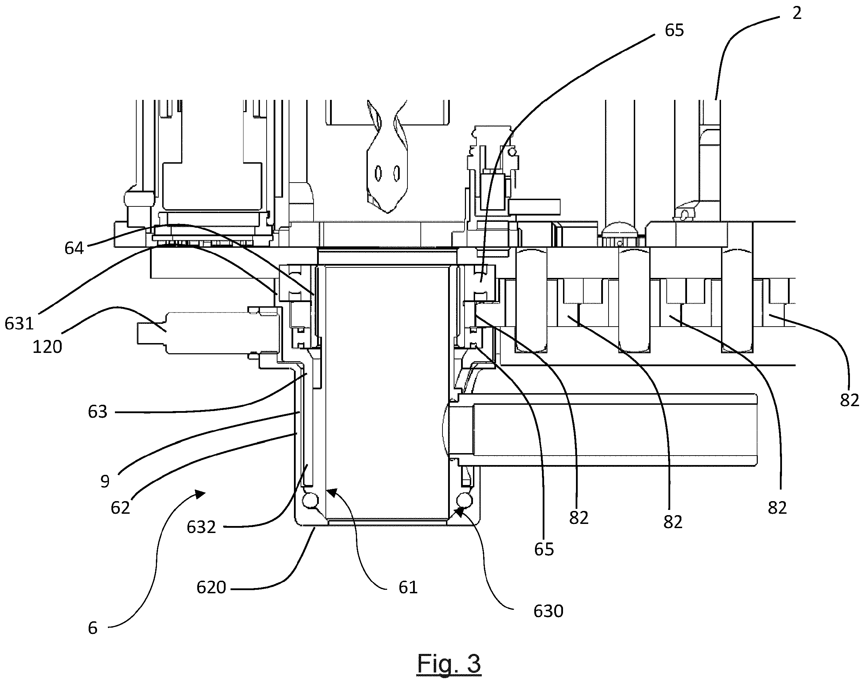

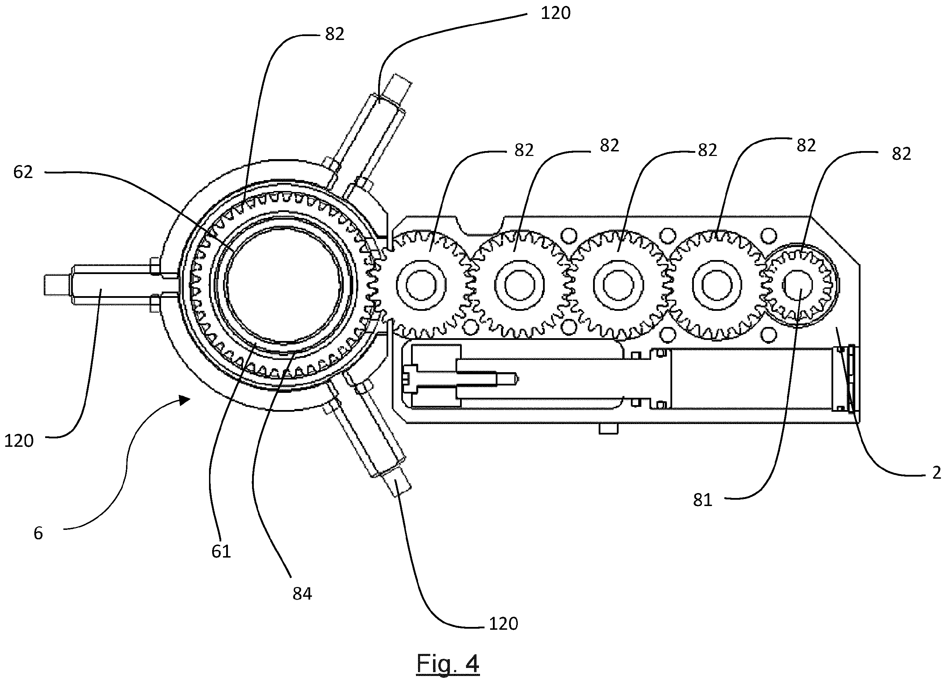

On décrit, en relation avec les figures 1 à 4 un exemple d'un dispositif multi-tâche selon l'invention.

Ainsi que cela est représenté sur ces figures, un tel dispositif multi-tâche 1 comprend un bâti 2.

Ce bâti 2 est équipé de moyens de fixation 3 à un dispositif de manutention motorisés (non représenté) auquel il est destiné à être solidarisé de manière à pouvoir être déplacé au moins en partie par rapport à une structure à travailler (non représentée).

Ces moyens de manutention motorisés appartiennent au groupe comprenant notamment :

- les bras robot ;
- les robots marcheurs par exemple selon le principe décrit dans le document de brevet FR-B1-2 809 034 ;
- les grilles numériques par exemple selon le principe décrit dans le document de brevet WOA-2-200349899.

De tels moyens de fixation 3 sont connus en soit et ne sont donc pas décrits. Ils peuvent par exemple comprendre un système de type à platine et boulons, des moyens de solidarisation rapides de type collier, un système à clamp ou à came....

Les moyens de manutention motorisés sont aptes à déplacer au moins en partie (notamment lorsque le contrôleur est fixe) le dispositif multitâche dans l'espace par rapport à la surface de la structure à travailler entre au moins une position d'approche dans laquelle le dispositif est proche de la surface tout en étant distante de celle-ci et une position d'accostage dans laquelle le dispositif est en applique contre la surface, par exemple en vue d'y être solidarisé si des moyens de solidarisation sont mis en œuvre. Ils peuvent également placer le dispositif multitâche dans une position de stockage lorsqu'il n'est pas utilisé pour réaliser une opération.

## Broche unique de sortie

Le dispositif comprend une unique broche d'entrainement 7 mobile en rotation et/ou en translation suivant un même axe.

Le dispositif comprend également des moyens moteurs et de transmission MT pour permettre d'animer la broche d'un mouvement de rotation et/ou de translation suivant son axe longitudinal. Ces moyens moteurs et de transmission sont connus en soit et ne sont pas décrits plus en détail ici.

## Contrôleur

Le dispositif comprend classiquement un contrôleur 4 comprenant l'électronique de contrôle et de puissance permettant de contrôler et d'alimenter en énergie le dispositif.

Ce contrôleur 4 est préférentiellement contenu dans un coffret distant du bâti 2 et entreposé de manière fixe sur site.

Le contrôleur 4, ou à tout le moins certains de ses composants, pourraient néanmoins être embarqués sur le bâti 2.

## Moyens de solidarisation à une structure à travailler (optionnels)

Le dispositif peut optionnellement, mais de manière préférentielle, comprendre des moyens de solidarisation 5 à la structure à travailler.

Ces moyens de solidarisation peuvent être de différents types.

Ils peuvent par exemple comprendre des ventouses 51 solidaires du bâti 2 et aptes à être reliées à des moyens de mise sous vide comme par exemple une pompe à vide pour améliorer la solidarisation à la surface de la structure à travailler. Ces ventouses peuvent être réunies par groupes pour former des pads à ventouses.

Lorsqu'aucun moyen de solidarisation à la structure à travailler n'est mis en œuvre, le dispositif de manutention peut constituer non seulement un moyen de positionnement du bâti par rapport à la structure à travailler mais également un moyen d'immobilisation de celui-ci en position par rapport à la structure à travailler.

## Modules fonctionnels

Le dispositif est susceptible d'embarquer une pluralité de modules fonctionnels MF.

Chacun de ces modules fonctionnels MF permet de réaliser une tâche particulière comme par exemple une opération de perçage et/ou de fraisurage, une opération de pose de rivets, une opération de pose de fixation temporaire (par exemple d'agrafe), une opération de dépose (ou d'enduction) sur un élément de fixation (un rivet ou une vis) d'un cordon de mastic d'étanchéité. D'autres fonctions pourraient être envisagées telles que du vissage.

Les modules fonctionnels appartiennent par exemple au groupe comprenant au moins :

- les modules de perçage et/ou fraisurage ;
- les modules de pose de rivets enduit ou non de mastic ;
- les modules de pose de fixations temporaires.

Une fixation temporaire utilisée dans l'industrie aéronautique est un organe mécanique permettant de serrer au moins deux parois, l'une contre l'autre, dans le but de réaliser des opérations de production nécessaires à un assemblage définitif de ces parois, tel que des contreperçages ou de la pose de vis ou de rivets.

Par définition, ces fixations temporaires sont enlevées au fur et à mesure que les vis ou rivets assurent leur fonction d'assemblage des parois.

Les fixations temporaires sont placées dans des trous réalisés dans les parois après le positionnement relatif initial de ces parois.

Les fixations temporaires ne nécessitent d'avoir accès que d'un coté de l'une des parois.

De tels modules fonctionnels sont notamment décrits dans les documents de brevet PCT/EP2020/069158, PCT/EP2020/069159, PCT/EP2020/069160, PCT/EP2020/069161, PCT/EP2020/069162, déposées par la Demanderesse.

Le dispositif comprend des moyens 12 permettant de mettre les différents modules embarqués dans l'alignement de la broche 7 pour réaliser une tâche. Ces moyens peuvent par exemple comprendre un carrousel, une cartouchière ou autre.

## Élément presseur

Le dispositif comprend un élément presseur 6 de forme tubulaire monté mobile en translation par rapport au bâti 2 selon l'axe de déplacement de la broche 7 et dans le prolongement de celle-ci. L'élément presseur est donc coaxial avec la broche. Dans la mesure où il est tubulaire, la broche peut se translater à l'intérieur de l'élément presseur.

Un tel élément presseur 6 peut par exemple être utilisé au cours d'une opération de perçage pour exercer un effort de compression sur la structure à percer, notamment pour assurer le contact entre les plaques d'un empilement et éviter l'introduction de copeaux et/ou la formation de bavures entre ces plaques lors du perçage.

L'élément presseur 6 comprend un premier élément 61 et un deuxième élément 62 liés par une liaison rotule 630 suivant l'axe de la broche.

Le deuxième élément 62 comprend une extrémité libre 620 apte à venir au contact de la surface de la structure à travailler.

Le premier élément 61 est mobile en translation suivant l'axe de la broche de manière tel que le deuxième élément 62 s'oriente orthogonalement à la surface lorsqu'il est comprimé contre la surface.

L'élément presseur comprend un élément intermédiaire 63. L'élément intermédiaire 63 comprend une extrémité 631 orientée vers le bâti 2 auquel elle est solidarisée de manière fixe. Elle comprend une extrémité opposée 632 orientée du côté de l'extrémité libre 620 du deuxième élément tubulaire 62. Le premier élément 61 est monté coulissant en translation à l'intérieur de l'élément intermédiaire suivant l'axe de la broche tout en étant immobile en rotation suivant cet axe. L'élément intermédiaire 63 est donc un moyen de guidage en translation du premier élément 61.

L'élément presseur comprend une bague 64. Cette bague est taraudée. Elle est montée mobile en rotation mais immobile en translation suivant l'axe de la broche en étant liée à l'élément intermédiaire au moyen d'une paire de roulements à billes 65.

Le premier élément tubulaire 61 comprend une portion filetée ménagée à sa périphérie qui coopère avec la partie taraudée de la bague. Ces portions taraudée et filetée constituent un système vis-écrou.

Le dispositif comprend des moyens d'entrainement en rotation de la bague. Ces moyens d'entrainement en rotation comprennent un moteur 8 dont le rotor comprend un arbre 81 lié à la bague 64 au moyen d'un cascade de pignons droits 82, la bague portant un pignon sur sa périphérie. D'autres types de motorisations et de transmissions pourraient être mis en œuvre pour entrainer en rotation la bague comme par exemple une transmission par courroie.

Le système vis-écrou, la cascade de pignons et le moteur constitue des moyens d'entrainement en translation du premier élément tubulaire 61.

Le moteur 8 est équipé d'un capteur d'angle 83 apte à mesurer l'angle de rotation du rotor par rapport au stator.

## Mesure de poussée appliquée par l'élément presseur

Dans un mode de réalisation, le dispositif comprend des moyens de mesure d'au moins une information représentative de la poussée suivant l'axe de la broche générée par la deuxième élément 62 de l'élément presseur 6 sur la surface de la structure à travailler.

Dans ce mode de réalisation, ces moyens de mesure comprennent un capteur de poussée 9 qui comprend des jauges de contraintes disposées sur le premier élément 61. D'autres types de capteurs de poussée pourraient alternativement être mis en œuvre.

Le dispositif comprend en outre des moyens 10 de détection de l'atteinte par la poussée :

- d'une valeur d'entrée en contact correspondant à la valeur de poussée au moment de l'entrée en contact de l'extrémité libre du deuxième élément avec la surface de la structure à travailler et,
- d'une valeur de pressage de la structure à travailler.

La valeur de poussée d'entrée en contact correspond à la valeur de la poussée enregistrée lorsqu'elle passe de zéro à une valeur non nulle.

La valeur de poussée pressage est une valeur prédéterminée à laquelle il est souhaité d'appliquer la poussée.

Des utilisations possibles de ces données seront décrites plus en détail par la suite.

**Détermination de la déformation de la structure à travailler sous l'effet de la poussée imprimée par l'élément presseur**

Dans un mode de réalisation, le dispositif comprend des moyens de mesure 11 de la déformation de la structure à travailler sous ledit effort de pressage.

La déformation mesurée par ces moyens de mesure correspond au déplacement en translation du premier élément 61 entre les moments où les moyens de détection détectent que la valeur de la poussée passe de la valeur d'entrée en contact à la valeur de pressage.

**Mesure d'inclinaison de l'élément presseur**

Dans un mode de réalisation, le dispositif comprend des moyens 12 de mesure d'au moins une information représentative de l'inclinaison du deuxième élément 62 par rapport à l'axe de la broche.

Dans ce mode de réalisation, les moyens de mesure d'au moins une information représentative de l'inclinaison comprennent des capteurs inductifs 120. Dans une variante, il pourrait s'agir de capteurs laser ou autre.

Ces capteurs inductifs sont portés par le bâti et répartis de manière uniforme autour du deuxième élément 62. Ils sont aptes à mesurer un déplacement radial du deuxième élément 62 par rapport au premier élément 61. Ces capteurs sont préférentiellement au nombre de trois. Ce déplacement radial est mesuré dans le plan médian PM des capteurs, lui-même distant d'une valeur L du centre de pivotement CP du premier élément presseur 61. Le déplacement radial n'est pas nécessairement dans le plan de l'un des capteurs, il est donc calculé à partir des signaux fournis par deux des capteurs éventuellement corrélés au signal du troisième capteur. L'exploitation desdits signaux conduit à connaitre l'excentration de la section de l'élément presseur située dans le plan médian des capteurs ainsi que l'orientation du déplacement de ladite section dans le plan médian.

Il est ainsi possible de connaitre la valeur de l'inclinaison ainsi que l'orientation du plan dans lequel se produit l'inclinaison. Le calcul de l'inclinaison relève de règles de géométrie connues dans l'état de l'art et ne sera pas plus détaillé ici.

La mise en œuvre de ces moyens de mesure de l'inclinaison de l'élément presseur permet de savoir si l'élément presseur est coaxial ou bien incliné par rapport à la broche.

Une valeur maximum d'inclinaison est définie au préalable, si l'inclinaison réelle est inférieure à cette valeur, alors l'inclinaison est simplement enregistrée et le perçage est poursuivi. Si l'inclinaison réelle est supérieure à la valeur prédéterminée alors le positionnement de l'effecteur par rapport à la surface à travailler est corrigé.

Si l'inclinaison réelle est nulle alors la broche est orthogonale à la surface de la structure à travailler.

**Mesure de la distance de sortie de l'élément presseur**

Dans un mode de réalisation, un repère est associé au bâti dont l'un des trois axes est parallèle à l'axe de la broche et l'origine peut être localisée à l'intersection entre l'axe de la broche et une surface de référence du bâti de l'effecteur perpendiculaire à l'axe de la broche.

Dans ce cas, le dispositif comprend des moyens 13 de mesure d'un déplacement en translation du premier élément 61 de l'élément presseur 6 par rapport au référentiel du bâti suivant l'axe de la broche.

Dans ce mode de réalisation, ces moyens de mesure du déplacement en translation du premier élément par rapport au référentiel du bâti comprennent le capteur de mesure de l'angle de rotation du rotor du moteur mis en œuvre pour entrainer en rotation la bague 64 et donc en translation l'élément presseur 6.

Ainsi les valeurs d'angle fournie par le capteur d'angle du moteur peuvent être utilisées pour calculer la distance entre l'extrémité libre du deuxième élément 62 de l'élément presseur et l'origine du repère selon la formule suivante :

$$\text{Distance surface/origine} = \text{Angle mesuré} \times \text{Const1} + \text{Const2}$$

Les constantes 1 et 2 sont déterminées à partir des caractéristiques géométriques de l'effecteur dont le pas du système vis-écrou décrit plus haut, le ratio de transmission entre le moteur et la bague, la position angulaire du capteur d'angle du moteur correspondant au zéro de l'angle etc.

**Détermination de la distance entre la surface de la structure à travailler et le dispositif**

Dans un mode de réalisation, le dispositif comprend des moyens 14 de détermination de la distance, suivant une direction parallèle à l'axe de la broche, entre la surface orientée vers le dispositif de la structure à travailler et la surface de référence du bâti dans la référentiel associé audit bâti.

Dans ce cas, le repère mentionné précédemment pour mesurer la distance de sortie de l'élément presseur peut être utilisé pour déterminer la distance entre la surface de la structure à travailler et le dispositif.

Ces moyens de détermination sont aptes à déterminer cette distance lorsque le dispositif est solidarisé à la structure à travailler par les moyens de solidarisation. Pour cela, ils tiennent compte de la valeur de l'angle fourni par le capteur d'angle 83 au moment où les moyens de détection détectent l'atteinte par la poussée de la valeur d'entrée en contact correspondant à la valeur de poussée au moment de l'entrée en contact de l'extrémité libre du deuxième élément avec la surface de la structure à travailler pour déterminer cette distance selon la formule suivante :

$$\text{Distance surface/bâti} = \text{Angle mesuré} \times \text{Const3} + \text{Const4}$$

Les constantes 3 et 4 sont déterminées à partir des caractéristiques géométriques de l'effecteur dont le pas du système vis-écrou décrit plus haut, le ratio de transmission entre le moteur et la bague, la position angulaire du capteur d'angle du moteur correspondant au zéro de l'angle etc.

**6.2. Fonctionnement**

Pour réaliser une tâche sur une structure à travailler, les moyens de manutention sont dans un premier temps mis en œuvre pour déplacer le dispositif multi-tâches à l'endroit de la structure où la tâche doit être réalisée.

Cette approche initiale s'appuie sur le fait que les moyens de contrôle des moyens de manutention connaissent la géométrie de la structure à travailler et sont donc apte à positionner l'effecteur à l'endroit où le trou doit être réalisé.

A l'issue de cette approche initiale le dispositif multi-tâche est dans une position telle que l'axe de la broche est sensiblement coaxial à l'axe du trou à réaliser, ledit dispositif restant écarté d'une certaine distance de la surface de la structure à traiter.

Cependant compte tenu des différentes imprécisions des moyens de manutention et de la structure, la position de l'effecteur vis-à-vis de la structure doit être affinée en utilisant des éléments de repérage préalablement ménagés ou disposés sur la structure à travailler pour repérer le ou les endroits où des tâches doivent être réalisées.

Des moyens de contrôle de l'orthogonalité de l'axe de la broche par rapport à la surface, comme par exemple une caméra montée de manière coaxiale à la broche et couplée à des lasers projetant un motif sur la surface de la structure, sont mis en œuvre pour vérifier si l'axe de la broche est ou non orthogonal à la surface. Dans le cas contraire, l'orientation du dispositif est modifiée au moyen des moyens de manutention de sorte à corriger l'inclinaison de l'axe de la broche par rapport à la surface.

Un défaut de localisation de l'axe de la broche vis-à-vis de l'élément de repérage peut être aussi déterminer grâce à l'usage de la caméra et est corrigé en conséquence par un déplacement du dispositif multi-tâche parallèlement à la surface.

Si l'élément de repérage initial est un trou préexistant, les moyens de manutention commencent par centrer la broche de l'effecteur sur ce trou puis déplacent le dispositif multi-tâche de façon relative à ce trou pour rejoindre l'emplacement du trou à réaliser, le positionnement relatif de ces trous étant connu des moyens de contrôle des moyens de manutention.

Une fois que la position du dispositif et l'orthogonalité de la broche sont corrects, le dispositif est déplacé de sa position d'approche à sa position d'accostage par les moyens de manutention dans une direction normale à la surface.

Les moyens de solidarisation, par exemple les ventouses, sont le cas échéant activés pour solidariser le bâti à la structure à travailler.

A l'issue de la solidarisation, l'élément presseur est déplacé en direction de la surface de la structure à travailler en vue de le plaquer contre la surface de la structure à travailler. Pour cela, le moteur 8 est actionné pour entrainer en rotation la bague 64. Sous l'effet de la rotation de la bague 64, le premier élément 61 de l'élément presseur se translate suivant l'axe de la broche en direction de la surface de la structure à travailler. L'extrémité libre 620 du deuxième élément 62 vient progressivement au contact de la surface induisant, par un effet de rotulage, une application de l'extrémité 620 du deuxième élément 62 contre la surface de la structure à travailler.

Tout au long du déploiement de l'élément presseur 6, les moyens de mesure du déplacement en translation de l'élément presseur mesurent l'angle de rotation du moteur.

Les moyens de mesure de la poussée mesurent la poussée jusqu'à détecter l'instant auquel la valeur de la poussée exercée sur la surface par l'élément presseur atteint la valeur d'entrée en contact.

Les moyens de détermination de la distance, suivant une direction parallèle à l'axe de la broche, entre la surface orientée vers le dispositif de la structure à travailler et la surface de référence du bâti déterminent alors cette distance en tenant compte de la valeur de l'angle fourni par le capteur d'angle au moment où lesdits moyens de détection détectent l'atteinte par la poussée de la valeur d'entrée en contact correspondant à la valeur de poussée au moment de l'entrée en contact de l'extrémité libre du deuxième élément avec la surface.

Le fait de connaître la distance de déploiement de l'élément presseur et/ou la distance entre la surface de la structure à travailler et la surface de référence du bâti peut permettre de vérifier que le dispositif se trouve correctement positionné par rapport à la surface. Un déploiement trop faible ou trop important par rapport à la position relative théorique du dispositif par rapport à la surface peut traduire un mauvais positionnement en réalité induisant la nécessité de corriger la position du dispositif après avoir désactiver les moyens de solidarisation. Dans ce cas, le contrôleur commende le dispositif pour opérer la correction de position requises.

L'élément presseur continu d'être déployé jusqu'à ce que les moyens de mesure de la poussée détectent l'atteinte par la poussée de la valeur de pressage prédéterminée correspondant à la pression qu'il est souhaité d'appliquer contre la surface de la structure à travailler.

Les moyens de mesure de l'inclinaison déterminent l'inclinaison de l'élément presseur par rapport à l'axe de la broche.

Dans une variante, l'inclinaison de l'axe de l'élément presseur par rapport à celui de la broche est mesuré puis :

- si l'inclinaison est inférieure à une première valeur prédéterminée, le perçage est réalisé et la valeur du défaut (i.e. l'inclinaison) est enregistrée ;
- si l'inclinaison est supérieure à une deuxième valeur prédéterminée, le processus de mise en position du dispositif est recommencé.

Les moyens de mesure de la déformation de la structure à travailler déterminent, lorsque la poussée atteint la valeur de pressage, la déformation subie par la structure à travailler sous l'effet de la pression imposée par l'élément presseur. Cette déformation correspond au déplacement en translation du premier élément 61 entre les moments où les moyens de détection détectent que la valeur de la poussée passe de la valeur d'entrée en contact à la valeur de pressage. Cette déformation peut être comparer à une valeur de référence pour s'assurer que la déformation imprimée à la structure à travailler est convenable.

Le module correspondant à l'opération que l'on souhaite réaliser est placé dans l'axe de la broche puis appareillé à celle-ci.

La broche est ensuite déplacée pour réaliser l'opération désirée, par exemple un perçage et/ou fraisurage, la pose d'un rivet enduit ou non, la pose d'une fixation temporaire...

Une fois que l'opération est réalisée, la broche est désappareillée du module fonctionnel puis le module fonctionnel est déplacé pour ne plus se situer dans l'axe de la broche.

D'autres tâches peuvent ensuite être réalisées au même endroit (par exemple la mise en place d'un rivet dans un trou) ou à un autre endroit de la structure à travailler.

## Revendications

**1.** Dispositif pour la réalisation d'au moins une tâche sur une structure à travailler, ledit dispositif comprenant :

- un bâti (2) ;
- des moyens de fixation (3) dudit bâti (2) à des moyens de manutention motorisés aptes à déplacer au moins en partie ledit dispositif dans l'espace par rapport à une structure à travailler ;
- des moyens de positionnement et/ou solidarisation (5) dudit dispositif à ladite structure à travailler ;
- une broche (7) susceptible d'être entraînée en rotation et/ou en translation suivant un même axe pour réaliser ladite au moins une tâche ;
- un élément presseur (6), coaxial à ladite broche (7), apte à exercer un effort de compression contre la surface de ladite structure à travailler lorsque ledit dispositif est solidarisé à ladite structure par lesdits moyens de positionnement et/ou solidarisation (5);

ledit élément presseur comprenant un premier (61) et un deuxième (62) éléments liés par une liaison rotule (630), ledit deuxième élément (62) comprenant une extrémité libre (620) apte à venir au contact de ladite surface et ledit premier élément (61) étant mobile en translation suivant l'axe de ladite broche (7) de manière tel que le deuxième élément (62) s'oriente orthogonalement à ladite surface lorsqu'il est comprimé contre ladite surface,

ledit dispositif comprenant des moyens d'entrainement en translation dudit premier élément (61), lesdits moyens d'entrainement en translation comprenant un système vis écrou, ledit système vis écrou comprend une portion filetée ménagée à la périphérie dudit premier élément (61) et une bague (64) taraudée mobile en rotation de forme complémentaire, lesdits moyens d'entrainement en translation comprenant des moyens d'entrainement en rotation de ladite bague (64) par rapport audit premier élément (61) immobilisé en rotation, ladite bague (64) étant immobilisée en translation suivant son axe par rapport au bâti (2),

lesdits moyens d'entrainement en rotation comprennent un moteur (8) relié à ladite bague (64) par une cascade de pignons (82).

2. Dispositif selon la revendication 1 comprenant des moyens de mesure d'au moins une information représentative de la poussée suivant l'axe de ladite broche (7) générée par ledit deuxième élément (62) sur ladite surface.

3. Dispositif selon la revendication 2 comprenant des moyens de détection (10) de l'atteinte par ladite poussée :

- d'une une valeur d'entrée en contact correspondant à la valeur de poussée au moment de l'entrée en contact de l'extrémité libre (620) du deuxième élément (62) avec ladite surface et,
- d'une valeur de pressage de ladite structure à travailler.

4. Dispositif selon l'une quelconque des revendications 1 à 3 comprenant des moyens de mesure (12) d'au moins une information représentative de l'inclinaison dudit deuxième élément (62) par rapport à l'axe de ladite broche (7).

5. Dispositif selon la revendication 4 dans lequel lesdits moyens de mesure (12) d'au moins une information représentative de l'inclinaison, comprennent des capteurs de distance portés par ledit bâti (2) et répartis de manière uniforme autour dudit deuxième élément (62), lesdits capteurs étant aptes à mesurer le déplacement radial dudit deuxième élément (62) par rapport au bâti (2).

6. Dispositif selon l'une quelconque des revendications 1 à 5 dans lequel lesdits premier (61) et deuxième (62) élément sont tubulaires.

7. Dispositif selon l'une quelconque des revendications 1 à 6 dans lequel un référentiel est associé audit bâti (2), ledit dispositif comprenant des moyens de mesure d'un déplacement en translation dudit premier élément (61) par rapport au référentiel dudit bâti (2) suivant l'axe de ladite broche (7).

8. Dispositif selon les revendications 2 et 7 en combinaison ou non avec l'une quelconque des revendications 3 à 6, dans lequel lesdits moyens de mesure du déplacement (13) en translation dudit premier élément (61) par rapport audit référentiel dudit bâti (2) comprennent un capteur (83) de mesure de l'angle de rotation du rotor dudit moteur (8).

9. Dispositif selon les revendications 2, 3 et 8 en combinaison ou non avec l'une quelconque des revendications 4 à 7, comprenant des moyens de détermination de la distance (14), suivant une direction parallèle à l'axe de ladite broche (7), entre la surface orientée vers ledit dispositif de ladite structure à travailler et une surface de référence dudit bâti (2) dans ledit référentiel associé audit bâti (2), lesdits moyens de détermination (14) déterminant ladite distance lorsque ledit dispositif est solidarisé à ladite structure à travailler par lesdits moyens de solidarisation (5), en tenant compte de la valeur de l'angle fourni par ledit capteur d'angle (83) au moment où lesdits moyens de détection (10) détectent l'atteinte par ladite poussée de ladite valeur d'entrée en contact correspondant à la valeur de poussée au moment de l'entrée en contact de l'extrémité libre (620) du deuxième élément (62) avec ladite surface.

10. Dispositif selon les revendications 2 et 3 en combinaison ou non avec l'une quelconque des revendications 4 à 9 comprenant des moyens de mesure (11) de la déformation de ladite structure à travailler sous ledit effort de compression, ladite déformation correspondant au déplacement en translation du premier élément (61) entre les moments où lesdits moyens de détection (10) détectent que la valeur de ladite poussée passe de ladite valeur d'entrée en contact à ladite valeur de pressage.

**11.** Dispositif selon l'une quelconque des revendications 1 à 10 dans lequel ledit dispositif est du type multi-tâches et comprend :

- au moins deux modules fonctionnels, chacun desdits modules fonctionnels comprenant au moins un organe mobile apte à permettre la réalisation d'une tâche donnée ;
- une unique broche (7) d'entrainement mobile en rotation et/ou en translation suivant un même axe et apte à coopérer individuellement avec lesdits organes mobiles pour leur pour les animer d'un mouvement de rotation et/ou de translation permettant la réalisation de leur tâche donnée.

**12.** Dispositif selon la revendication 11 dans lequel lesdits modules fonctionnels appartiennent au groupe comprenant au moins :

- les modules de perçage ;
- les modules de pose de rivets enduits ou non de mastic ;
- les modules de pose de fixations temporaires.

**Patentansprüche**

**1.** Vorrichtung zur Durchführung mindestens einer Aufgabe an einer zu bearbeitenden Struktur, wobei die Vorrichtung Folgendes umfasst:

- ein Gestell (2);
- Befestigungsmittel (3) des Gestells (2) an motorisierten Mitteln zur Handhabung, die in der Lage sind, die Vorrichtung mindestens teilweise im Raum in Bezug auf eine zu bearbeitende Struktur zu bewegen;
- Mittel zur Positionierung und/oder Befestigung (5) der Vorrichtung an der zu bearbeitenden Struktur;
- eine Spindel (7), die in Drehung und/oder in Translation entlang derselben Achse angetrieben werden kann, um die mindestens eine Aufgabe auszuführen;
- ein Druckelement (6), koaxial zu der Spindel (7), das in der Lage ist, eine Druckkraft gegen die Oberfläche der zu bearbeitenden Struktur auszuüben, wenn die Vorrichtung durch die Mittel zur Positionierung und/oder Befestigung (5) mit der Struktur verbunden ist;
wobei das Druckelement ein erstes (61) und ein zweites (62) Element umfasst, die durch eine Kugelverbindung (630) verbunden sind, wobei das zweite Element (62) ein freies Ende (620) umfasst, das in der Lage ist, in Kontakt mit der Oberfläche zu kommen, und das erste Element (61) in Translation entlang der Achse der Spindel (7) beweglich ist, so dass das zweite Element (62) orthogonal zur Oberfläche ausgerichtet ist, wenn es gegen die Oberfläche gedrückt wird, wobei die Vorrichtung Mittel für den Antrieb in Translation des ersten Elements (61) umfasst,
wobei die Mittel für den Antrieb in Translation ein Schraubenmuttersystem umfassen, wobei das Schraubenmuttersystem einen Gewindeabschnitt, der am Umfang des ersten Elements (61) vorgesehen ist, und einen drehbar beweglichen Ring (64) mit Innengewinde in komplementärer Form umfasst, wobei die Mittel für den Antrieb in Translation Mittel für den Antrieb in Rotation des Rings (64) in Bezug auf das erste Element (61) umfassen, das gegen Rotation fixiert ist, wobei der Ring (64) gegen Translation entlang seiner Achse in Bezug auf das Gestell (2) fixiert ist,
die Mittel für den Antrieb in Rotation einen Motor (8) umfassen, der über eine Zahnradkaskade (82) mit dem Ring (64) verbunden ist.

**2.** Vorrichtung nach Anspruch 1, die Mittel zur Messung mindestens einer Information umfasst, die repräsentativ für den Schub entlang der Achse der Spindel (7) ist, der von dem zweiten Element (62) auf der Oberfläche erzeugt wird.

**3.** Vorrichtung nach Anspruch 2, umfassend Mittel (10) zum Erfassen des Erreichens durch den Schub:

- eines Kontakteingangswerts, der dem Schubwert zum Zeitpunkt des Kontakts des freien Endes (620) des zweiten Elements (62) mit der Oberfläche entspricht, und
- eines Druckwerts der zu bearbeitenden Struktur.

**4.** Vorrichtung nach einem der Ansprüche 1 bis 3 mit Mitteln zur Messung (12) mindestens einer Information, die repräsentativ für die Neigung des zweiten Elements (62) in Bezug auf die Achse der Spindel (7) ist.

**5.** Vorrichtung nach Anspruch 4, bei der die Mittel zur Messung (12) mindestens einer Information, die repräsentativ für die Neigung ist, Abstands Sensoren umfassen, die von dem Gestell (2) getragen werden und gleichmäßig um das zweite Element (62) herum verteilt sind, wobei die Sensoren geeignet sind, die radiale Verschiebung des zweiten Elements (62) in Bezug auf das Gestell (2) zu messen.

**6.** Vorrichtung nach einem der Ansprüche 1 bis 5, wobei das erste (61) und das zweite Element (62) röhrenförmig sind.

**7.** Vorrichtung nach einem der Ansprüche 1 bis 6, bei der ein Bezugssystem mit dem Gestell (2) verbunden ist, wobei die Vorrichtung Mittel zur Messung einer Translationsbewegung des ersten Elements (61) in Bezug auf das Bezugssystem des Gestells (2) entlang der Achse der Spindel (7) umfasst.

**8.** Vorrichtung nach den Ansprüchen 2 und 7 in Kombination oder nicht in Kombination mit einem der Ansprüche 3 bis 6, wobei die Mittel zur Messung der Translationsbewegung (13) des ersten Elements (61) in Bezug auf das Bezugssystem des Gestells (2) einen Sensor (83) zur Messung des Drehwinkels des Rotors des Motors (8) umfassen.

**9.** Vorrichtung nach den Ansprüchen 2, 3 und 8 in Kombination oder nicht in Kombination mit einem der Ansprüche 4 bis 7, umfassend Mittel zur Bestimmung des Abstands (14) in einer Richtung parallel zur Achse der Spindel (7) zwischen der der bearbeitenden Struktur der zu Vorrichtung zugewandten Oberfläche und einer Bezugsoberfläche des Gestells (2) in dem mit dem Gestell (2) verbundenen Bezugssystem, wobei die Mittel zur Bestimmung (14) den Abstand bestimmen, wenn die Vorrichtung mit der zu bearbeitenden Struktur durch die Mittel zur Befestigung (5) fest verbunden ist, indem sie den Wert des Winkels berücksichtigen, der von dem Winkelsensor (83) zu dem Zeitpunkt geliefert wird, zu dem die Mittel zur Erfassung (10) erfassen, dass der Schub den Kontakteingangswert erreicht, der dem Schubwert zum Zeitpunkt des Kontakts des freien Endes (620) des zweiten Elements (62) mit der Oberfläche entspricht.

**10.** Vorrichtung nach den Ansprüchen 2 und 3 in Kombination oder nicht in Kombination mit einem der Ansprüche 4 bis 9, umfassend Mittel zur Messung (11) der Verformung der zu bearbeitenden Struktur unter der Druckkraft, wobei die Verformung der Translationsbewegung des ersten Elements (61) zwischen den Zeitpunkten entspricht, zu denen die Mittel zum Erfassen (10) erfassen, dass der Wert des Schubs von dem Kontakteingangswert auf den Druckwert übergeht.

**11.** Vorrichtung nach einem der Ansprüche 1 bis 10, wobei die Vorrichtung vom Multitasking-Typ ist und Folgendes umfasst:

- mindestens zwei Funktionsmodule, wobei jedes der Funktionsmodule mindestens ein bewegliches Element umfasst, das in der Lage ist, die Durchführung einer bestimmten Aufgabe zu ermöglichen;
- eine einzige bewegliche Antriebs Spindel (7), die sich in Drehung und/oder in Translation entlang derselben Achse bewegt und in der Lage ist, einzeln mit den beweglichen Elementen zusammenzuarbeiten, um sie durch eine Dreh- und/oder Translationsbewegung zu bewegen, die die Ausführung ihrer gegebenen Aufgabe ermöglicht.

**12.** Vorrichtung nach Anspruch 11, wobei die Funktionsmodule zur Gruppe gehören, die mindestens Folgendes umfasst:

- die Bohrmodule;
- die Module zum Setzen von mit oder ohne Dichtmasse beschichteten Nieten;
- die Module zum Anbringen von temporären Befestigungen.

**Claims**

**1.** Device for carrying out at least one task on a structure to be worked, said device comprising:

- a frame (2);
- means (3) for fastening said frame (2) to motor-driven handling means capable of at least partly moving said device in space relative to a structure to be worked;
- means (5) for positioning and/or securing said device to said structure to be worked;
- a spindle (7) capable of being driven in rotation and/or in translation along the same axis to carry out said at least one task;

- a pressing element (6), coaxial with said spindle (7), capable of exerting a compressive force against the surface of said structure to be worked when said device is secured to said structure by said means for positioning and/or securing (5);

said pressing element comprising a first (61) and a second (62) element connected by a ball joint connection (630), said second element (62) comprising a free end (620) capable of coming into contact with said surface and said first element (61) being movable in translation along the axis of said spindle (7) so that the second element (62) orients orthogonally to said surface when compressed against said surface, said device comprising means for translational driving of said first element (61),

said means for translational driving comprising a screw-nut system, said screw-nut system comprising a threaded portion provided at the periphery of said first element (61) and a threaded ring (64) movable in rotation with a complementary shape, said means for translational driving comprising means for rotational driving of said ring (64) with respect to said first element (61) immobilised in rotation, said ring (64) being immobilised in translation along its axis with respect to the frame (2),

said means for rotational driving comprise a motor (8) connected to said ring (64) by a cascade of pinions (82).

2. Device according to claim 1, comprising means for measuring at least one piece of information representative of the thrust along the axis of said spindle (7) generated by said second element (62) on said surface.

3. Device according to claim 2, comprising means (10) for detecting when said thrust reaches:

- a coming-into-contact value corresponding to the thrust value at the time the free end (620) of the second element (62) comes into contact with said surface, and
- a value of pressing of said structure to be worked.

4. Device according to any one of claims 1 to 3, comprising means (12) for measuring at least one piece of information representative of the inclination of said second element (62) relative to the axis of said spindle (7).

5. Device according to claim 4, wherein said means (12) fr measuring at least one piece of information representative of the inclination comprise distance sensors carried by said frame (2) and distributed uniformly around said second element (62), said sensors being able to measure the radial movement of **said** second element (62) relative to the frame (2).

6. Device according to any one of claims 1 to 5, wherein said first (61) **and** second element (62) are tubular.

7. Device according to any one of claims 1 to 6, wherein a reference frame is associated with said frame (2), said device comprising means for measuring a translational movement of said first element (61) with respect to the reference frame of said frame (2) along the axis of said spindle (7).

8. Device according to claims 2 and 7 in combination or not with any one of claims 3 to 6, wherein said means for measuring the translational movement (13) of said first element (61) with respect to said reference frame of said frame (2) comprise a sensor (83) for measuring the angle of rotation of the rotor of said motor (8).

9. Device according to claims 2, 3 and 8 in combination or not with any one of claims 4 to 7, comprising means for determining the distance (14), along a direction parallel to the axis of said spindle (7), between the surface oriented towards said device of said structure to be worked and a reference surface of said frame (2) in said reference frame associated with said frame (2), said means (14) for determining determining said distance when said device is secured to said structure to be worked by said securing means (5), taking into account the value of the angle provided by said angle sensor (83) at the time when said means (10) for detecting detect the reaching by said thrust of said coming-into-contact value corresponding to the thrust value at the time of the coming into contact of the free end (620) of the second element (62) with said surface.

10. Device according to claims 2 and 3 in combination or not with any one of claims 4 to 9, comprising means (11) for measuring the deformation of said structure to be worked under said compressive force, said deformation corresponding to the translational movement of the first element (61) between the times when said means (10) for detecting detect that the value of said thrust changes from said coming-into-contact value to said value of pressing.

11. Device according to any one of claims 1 to 10, wherein said device is of the multi-task type and comprises:

- at least two functional modules, each of said functional modules comprising at least one movable member that can allow carrying out a given task;
- one single driving spindle (7) movable in rotation and/or in translation along the same axis and capable of cooperating individually with said movable members in order to drive them in a rotational and/or translational movement enabling them to carry out their given task.

12. Device according to any one of claim 11, wherein said functional modules belong to the group comprising at least:

- drilling modules;
- modules for placing rivets coated or not with mastic;
- modules for placing temporary fasteners.

EP 4 444 514 B1

Fig. 1

16

**Fig. 2**

EP 4 444 514 B1

Fig. 3

Fig. 4

EP 4 444 514 B1

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2020069158 W
- EP 2020069159 W
- EP 2020069160 W
- EP 2020069161 W
- EP 2020069162 W
- WO 2020212631 A1
- FR 2809034 B1
- WO 2200349899 A